# EUROPEAN PATENT SPECIFICATION

(11) **EP 0 538 066 B1**
(45) Date of publication and mention of the grant of the patent: **06.08.1997**
(21) Application number: 92309501.2
(22) Date of filing: 16.10.1992
(51) Int. Cl.: B27G 19/02, H01H 13/08

(54) **Miter saw**
Gehrungssäge
Scie d'onglets

(30) Priority: 18.10.1991 JP 299691/91
(43) Date of publication of application: 21.04.1993
(73) Proprietor: MAKITA CORPORATION, Anjo-shi, Aichi-ken (JP)
(72) Inventor: Sasaki, Katsuhiko, c/o Makita Corporation, Anjo-shi, Aichi-ken (JP); Shibata, Yohinori, c/o Makita Corporation, Anjo-shi, Aichi-ken (JP)
(74) Representative: Senior, Alan Murray

(56) References cited:
- EP-A- 407 205
- EP-A- 0 450 400
- DE-A- 3 104 733
- DE-A- 3 119 573
- US-A- 1 900 553
- US-A- 3 177 909
- US-A- 4 805 504

## Description

The present invention relates to a miter saw.

A conventional miter saw includes a base and a body vertically pivotally mounted on the base. A motor is mounted on the body for driving a circular saw blade. The body includes a blade case partly covering the saw blade. A safety cover is mounted on the blade case for covering a part of the saw blade which is exposed from the blade case. The safety cover is moveable to uncover the exposed part of the saw blade for cutting operation by the saw blade. A mechanism may be provided for moving the safety cover to uncover the exposed part of the saw blade as the body is pivoted downwardly from the uppermost position where the exposed part of the saw blade is completely covered by the safety cover. The mechanism may utilize gravity of the safety cover itself or include a link mechanism interlocked with the safety cover for moving the safety cover to uncover the part of the exposed saw blade as the body is moved downwardly from the uppermost position. An example of such a miter saw incorporating a link mechanism is described in EP-A-0,407,205 and discloses the preamble of claim 1.

With such a miter saw, it has been proposed to provide a lock device for keeping the body at the uppermost position for safety purpose when the miter saw is not operated. Japanese Utility Model Publication No. 62-5289, DE-OS 31 19 573 disclose a lock device which directly secures a body of a miter saw to a base.

Although such prior art lock devices can maintain the miter saw at an uppermost position, they cannot maintain a safety cover itself at a position to cover a saw blade. Therefore, it may accidentally cause the safety cover to be moved to uncover the exposed part of the saw blade.

EP-A-131,376 discloses a miter saw where the body and safety cover can be locked by locking a linkage connected between the base and the body and to the cover, which uncovers the saw blade as the body is lowered. Adjustment of the linkage is required to obtain access to the blade for maintenance or replacement.

EP-A-450,400 discloses a miter saw where a latch mechanism is provided between an actuating lever assembly and a safety cover to prevent uncovering of the exposed part of the saw blade. The actuating lever assembly carries a latch cooperating with a catch on the safety cover near its supporting shaft. Operation of the actuating lever assembly releases this catch and rotates the safety cover by means of a tension cord, at the same time, by means of a series of components of the lever assembly, releasing a second latch locking the saw in its fully raised position.

It is, accordingly, an object of the present invention to provide a miter saw which can reliably prevent a safety cover from accidentally moving to uncover a saw blade. In particular, the present invention provides a miter saw of simple construction with a locking system which, by operation of a single lever, serves to fix the body at the uppermost position, to fix the safety cover at the position entirely to cover the exposed part of the saw blade so as to prevent accidental exposure of the saw blade, but which allows manual opening of the cover when required for maintenance and to lock the trigger.

According to the present invention there is provided a miter saw comprising:
a base;
a body vertically pivotally mounted on said base and rotatably supporting a saw blade driven by a motor,
said body including a blade case for partly covering said saw blade and including a safety cover movable between a covering position to substantially cover the exposed part of said saw blade and an uncovering position to uncover the exposed part of the saw blade;
a link member connected between said base and said body so as to be pivotally moved in a pivotal plane as said body is vertically pivoted said link member being operably connected to said safety cover such that said safety cover is moved from said covering position to said uncovering position as said body is pivoted downwardly from its uppermost position;
said safety cover being operably connected to said link member through abutment thereof by means of an abutting plate;
   characterised by
   a lever for operation by an operator mounted on said body and movable between a first position and a second position;
   said lever comprising a rod mounted in said body such that said rod is pivotable about the rod axis when said lever is moved between said first and said second position and a first and a second lever member rigidly connected to said rod;
   said first lever member including a stopper portion said stopper portion in said first position of said lever being opposed to a part of said safety cover to prevent movement of said safety cover in a direction to uncover said exposed part of said saw blade and in said second position of said lever not being so opposed;
   said second lever member engaging a lock member said lock member being movable by movement of said lever said lock member at said first position of said lever engaging said link member for fixing said link member in position when said body is positioned at said uppermost position thereby maintaining said body at said uppermost position and said lock member at said second position of said lever being disengaged from said link member;
   said body including a trigger and a trigger lock device mounted on a part of said body; said trigger being operable by an operator for starting and stopping said motor; said trigger lock device being operable to selectively fix said trigger at a position for stopping said motor; said first lever member being interlocked with said trigger lock device in such a manner that said trigger lock device operates to fix said trigger to said position for stopping said motor when said lever is positioned at said first position and that said trigger lock device permits said trigger to be operated for starting said motor when said lever is at said second position.

The invention will be further described by way of non-limitative example with reference to the accompanying drawings, in which:-
FIG. 1 is a left side view of a miter saw according to an embodiment of the present invention;
FIG. 2 is a right side view, with a part broken away, of the miter saw shown in FIG. 1;
FIG. 3 is a sectional view taken along line III-III in FIG. 1;
FIG. 4 is an enlarged view of a lock plate shown in FIG. 2;
FIGS. 5(A) and 5(B) are sectional views taken along line V-V in FIG. 2 and show different operations; and
FIGS. 6(A) and 6(B) are sectional views taken along line VI-VI in FIG. 2 and show different operations corresponding to FIGS. 5(A) and 5(B), respectively.

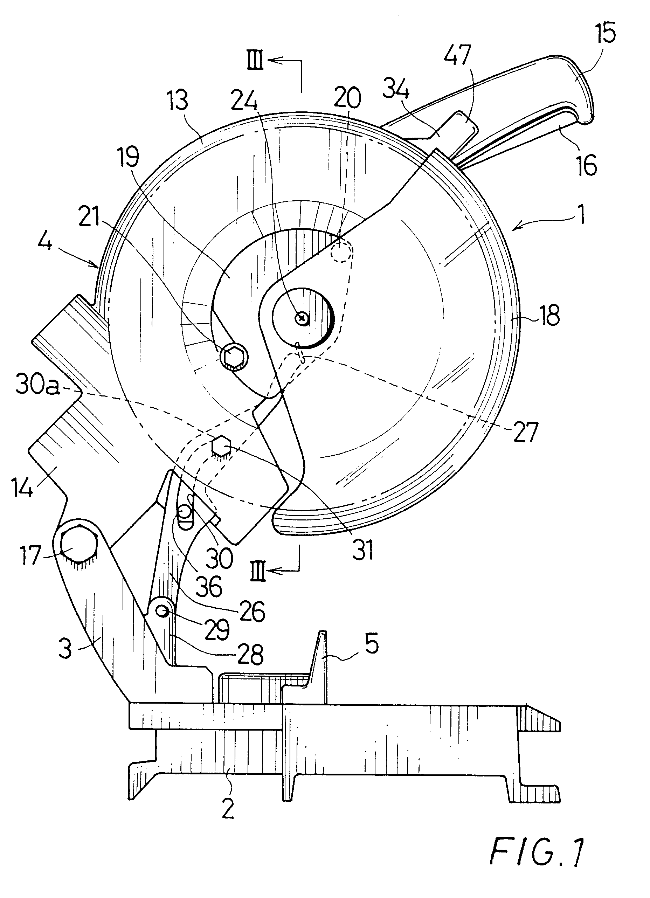

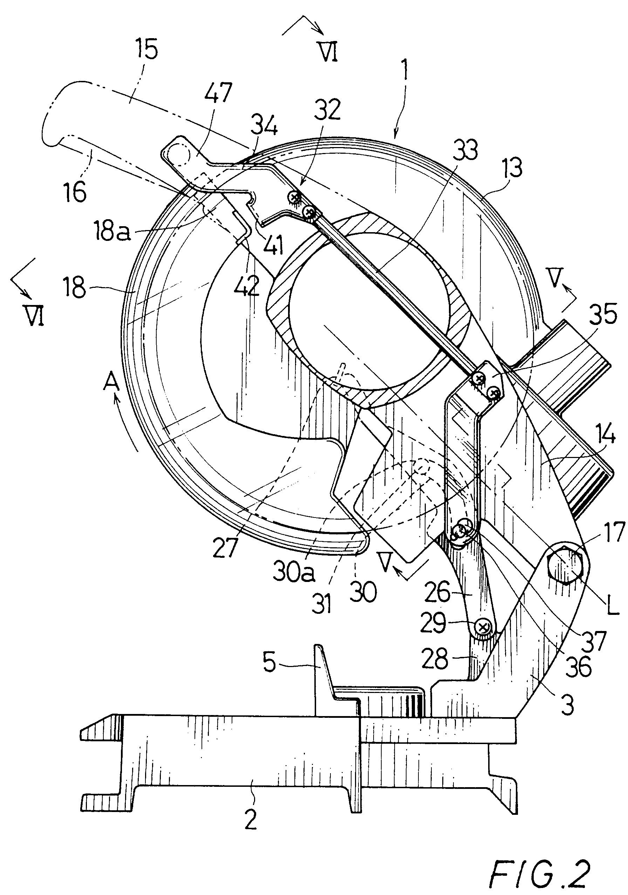

An embodiment of the present invention will be hereinafter explained with reference to the drawings. Referring to FIGS. 1 and 2, there is shown a miter saw 1 in a left side view and a right side view, respectively. The miter saw 1 includes a base 2 for supporting a work (not shown) thereon, an arm 3 fixed to the base 2 and extending upwardly therefrom, a body 4 pivotally mounted on the arm 3 in a vertical direction and a fence member 5 mounted on the base 2 for guiding the lateral surface of the work. The arm 3 is inclined rearwardly to some extent.

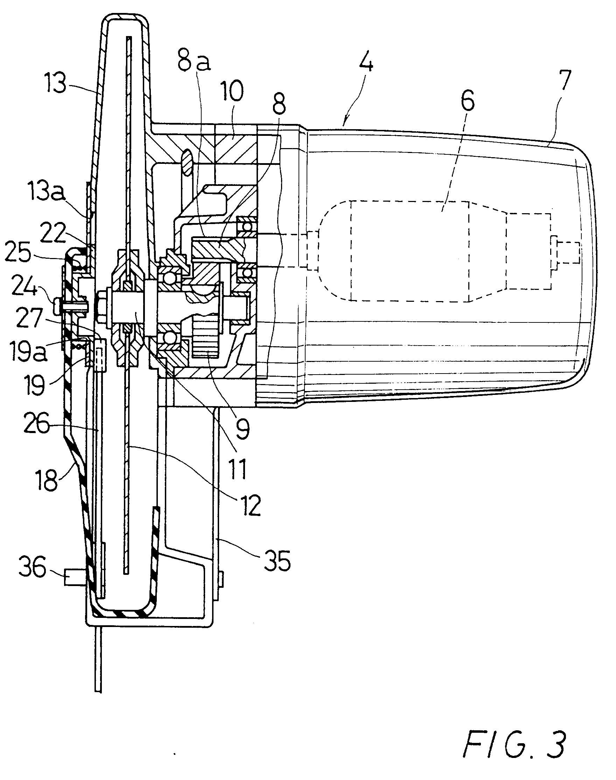

As shown in FIG. 3, the body 4 includes a motor housing 7 for accommodating a motor 6, a gear housing 10 accommodating a reduction gear 9 which is in engagement with a pinion 8a formed on a motor shaft 8 of the motor 6, and a blade case 13 partly accommodating a circular saw blade 12 which is detachably mounted on an output shaft 11 of the reduction gear 9. The blade case 13 includes a connecting portion 14 (see FIGS. 1 and 2) for connection with the arm 3.

A handle 15 extends outwardly from the motor housing 7 for vertical movement of the body 4 by an operator. The handle 15 includes a trigger 16 for operation of a switch (not shown) to start or stop the motor 6. The connecting portion 14 is pivotally connected to the arm 3 through a pin 17, so that the body 4 vertically pivots around the pin 17 by moving the handle 15. A spring (not shown) is interposed between the arm 3 and the connecting portion 14 for normally biasing the body 4 upwardly.

As shown in FIG. 3, the blade case 13 includes an opening 13a at a position opposite to the central portion of the saw blade 12. A mounting plate 19 for mounting a safety cover 18 on the blade case 13 is placed on the blade case 13 against the opening 13a. As shown in FIG. 1, the mounting plate 19 includes end portions substantially diametrically opposed to each other, one of which is pivotally supported by the blade case 13 through a screw 20 and the other of which is detachably mounted to the blade case 13 through a bolt 21.

The mounting plate 19 includes at its central portion an opening 19a for rotatably receiving a cap 22. A substantially fan-shaped safety cover 18 is secured to the cap 22 through a screw 24 for covering a part of the saw blade 12 which is exposed to the outside from the blade case 13. A spiral spring 25 is interposed between the mounting plate 19 and the safety cover 18 for normally biasing the safety cover 18 in a direction to entirely cover the exposed part of the saw blade 12.

An abutting plate 27 is fixed to the rear surface of the cap 22 and is in abutment on an upper end of a link member 26 which controls the rotational position of the cap 22 or the safety cover 18. As shown in FIG. 1 or 2, a bracket 28 is fixed to a lower portion of the arm 3 and vertically upwardly extends therefrom. The link member 26 is pivotally mounted on an upper end of the bracket 28 through a pin 29. An elongated control slot 30 is formed on the central portion of the link member 26 and extends in a longitudinal direction thereof. The control slot 30 has substantially arc-shaped configuration. A guide pin 31 is mounted on the blade case 13 and is in engagement with the control slot 30. The upper portion of the control slot 30 is determined to have a smaller radius than the lower portion. Thus, as the body 4 is lowered from its uppermost position, the link member 26 is pivoted in response to the movement of the engaging position of the roller pin 31 with the control slot 30, and the cap 22 is rotated together with the safety cover 18 in a counterclockwise direction in FIG. 2 against the biasing force of the spring 25 through abutment of the upper end of the link member 26 with the abutting plate 27. Thus, the safety cover 18 is moved to uncover the exposed part of the saw blade 12.

A lever 32 is disposed on the right side of the body 4 for securing the body 4 at the most upper position as shown in FIGS. 1 and 2 where the roller pin 31 engages an upper end 30a of the control slot 30 of the link member 26. As shown in FIG. 2, the lever 32 includes a rod 33 displaced in parallel relationship from a central line L of the body 4 which extends through a central axis of the pin 17 or a pivotal axis of the body 4. A lever member 34 is connected to one end of the rod 33 and extends outwardly beyond the body 3 so as to protrude substantially in the same direction as the handle 15 at a position adjacent the handle 15. A lock plate 35 is fixed to the other end of the rod 33 and extends to intersect the link member 26.

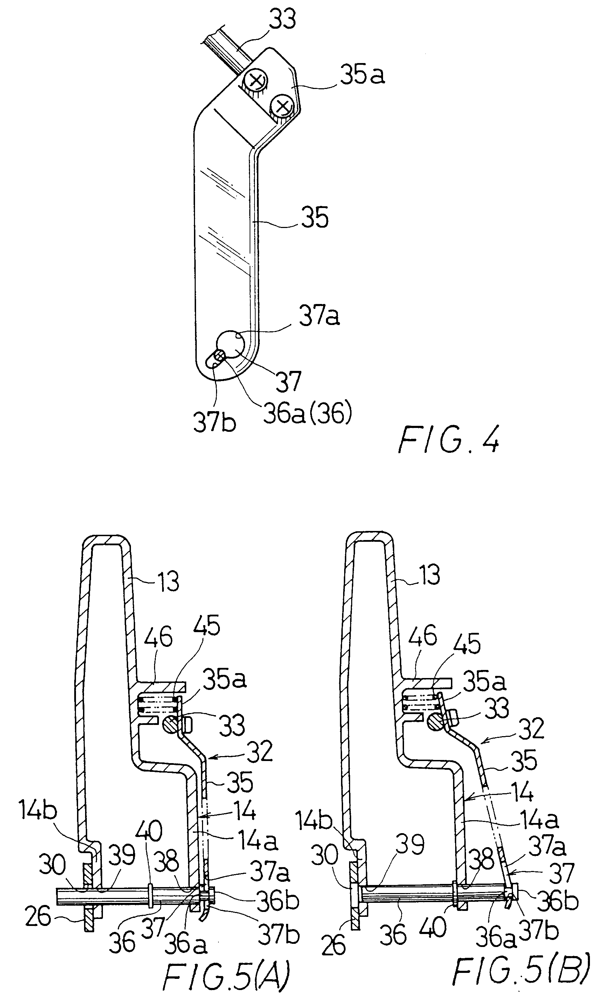

The lock plate 35 includes at its lower portion a slot 37 for engagement with a lock pin 36 inserted into the connecting portion 14 of the body 4. As shown in FIG. 4, the slot 37 includes a circular portion 37a and an elongated portion 37b extending from the circular portion 37a in a direction substantially perpendicular to the rod 33.

As shown in FIG. 5(A), the connecting portion 14 of the body 4 includes side plates 14a and 14b opposed to each other. The side plates 14a and 14b include holes 38 and 39, respectively. The end portions of the lock pin 36 are slidably inserted into the holes 38 and 39, respectively. A collar 40 having a larger diameter than the holes 38 and 39 is formed on a middle portion of the lock pin 36. The distance between the collar 40 and one end of the lock pin 36 on a side of the side plate 14b is slightly longer than the distance between the side plates 14a and 14b in such a manner that the one end of the lock pin 36 does not extend outwardly from the hole 39 when the collar 40 abuts on the side plate 14a as shown in FIG. 5(B).

The other end of the lock pin 36 includes a head 36b and a neck 36a. The neck 36a has a smaller diameter than the head 36b or the other portion of the lock pin 36 and is inserted into the elongated portion 37b of the slot 37 of the lock plate 35 with the head 36b engaged by the outer surface of the lock plate 35. The circular portion 37a of the slot 37 has a larger diameter than the head 36b of the lock pin 36 and serves as an insertion hole of the head 36b for mounting the lock pin 36 on the lock plate 35.

A compression spring 45 is interposed between an end portion of a connecting part 35a of the lock plate 35 and an outer surface of the blade case 13 opposed to the end portion of the connecting part 35. The connecting part 35a is formed to connect the rod 33 to the lock plate 35. The compression spring 45 biases the lock plate 35 in a direction to move the lock pin 36 toward the link member 26 or a clockwise direction in FIG. 5(A) around the rod 33. The blade case 13 includes a rib 46 for receiving the compression spring 45 and for preventing the compression spring 45 from being exposed to the outside.

The mounting position of the lock pin 36 on the connecting portion 14 of the body 4 is determined in such a manner that the lock pin 36 is opposed to the lower portion of the control slot 30 of the link member 36 and is permitted to engage the lower end of the control slot 30 by the biasing force of the compression spring 45 as shown in FIG. 5(A) when the body 4 is positioned at the uppermost position as shown in FIG. 2.

The lever member 34 connected to the upper end of the rod 33 includes a handle portion 47 prepared to be grasped by the operator. When the operator moves the lever member 34 at a position shown in FIG. 5(A) through the handle portion 47 in a direction laterally away from the blade case 13 so as to pivot the lock plate 35 against the biasing force of the compression spring 45, the lock pin 36 is removed from the control slot 30 as shown in FIG. 5(B).

As shown in FIG. 2, the lever member 34 further includes a stopper portion 41 which is bent from the lever member 34 perpendicular thereto and which is positioned adjacent one end 18a of the safety cover 18 in a rotational direction shown by the arrow A in FIG. 2 or a direction to uncover the exposed part of the saw blade 12 when the exposed part of the saw blade 12 is entirely covered by the safety cover 18. The stopper portion 41 is opposed in the rotational direction of the safety cover 18 to the one end 18a of the safety cover 18 for preventing rotation of the safety cover 18 to uncover the exposed part of the saw blade 12 when the lock pin 36 is in engagement with the lower end of the control slot 30 of the link member 26 as shown in FIG. 5. On the other hand, the stopper portion 41 permits rotation of the safety cover 18 to uncover the exposed part of the saw blade 12 when the lock pin 36 is disengaged from the control slot 30. The one end 18a of the safety cover 18 includes an L-shaped part 42 having a larger thickness for abutment on the stopper portion 41.

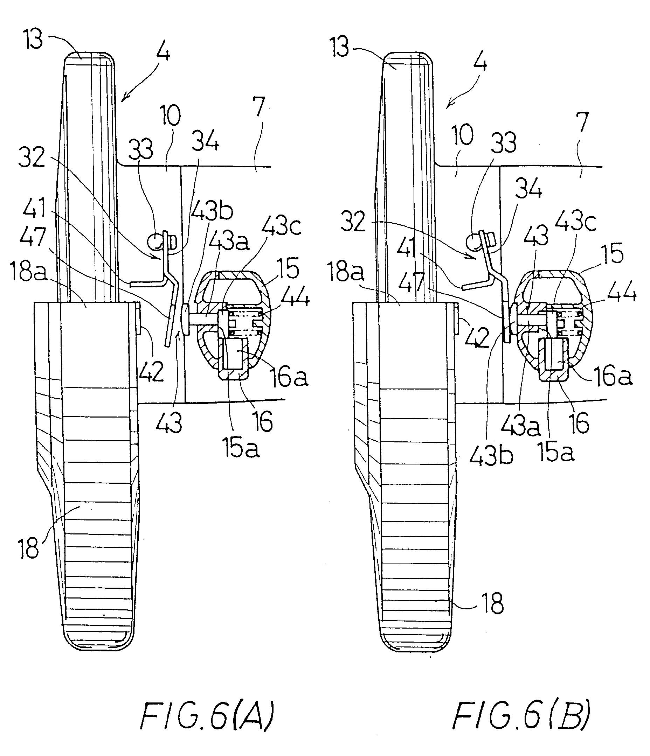

The lever member 34 extends in the same direction as the handle 15 as described above. A lock-off button 43 is slidably mounted on the handle 15 and is movable to extend from and to retract into the handle 15. The lock-off button 43 is interlocked with the trigger 16 and is disposed at a position opposed to the handle portion 47 of the lever member 34 as shown in FIG. 6(A). The lock-off button 43 includes a shank 43a slidably supported by the handle 15, a head 43 having a larger diameter than the shank 43a and positioned outwardly of the handle 15, and a stopper plate 43c disposed within the handle 15 for engagement with a recess 15a formed on a part of the inner wall of the handle 15. A spring 44 is interposed between the stopper plate 43c and a part of the inner wall of the handle 15 opposed to the stopper plate 43c for normally biasing the lock-off button 43 to extend outwardly from the handle 15.

When the lock pin 36 is in engagement with the lower end of the control slot 30 of the link member 26 as shown in FIG. 5(A), the lever member 34 is spaced from the lock-off button 43. Therefore, the lock-off button 43 is maintained at a most extended position from the handle 15 where the stopper plate 43c is in engagement with the recess 15a as shown in FIG. 6(A). When the lever member 34 is moved to the position shown in FIG. 5B for removing the lock pin 36 from the control slot 30 of the link member 26, the head 43a of the lock-off button 43 is pressed by the lever member 34 and the lock-off button 43 is retracted into the handle 15 against the force of the spring 44 until the head 43a abuts on the outer surface of the handle 15.

The trigger 15 is of substantially U-shaped configuration in section to form a recess 16a for receiving a part of the stopper plate 43c of the lock-off button 43. When the lock-off button 43 is positioned at the retracting position as shown in FIG. 6(A), the stopper plate 43c is faced to an end surface 16b of the trigger 16 forming an inlet of the recess 16a so as to prevent the trigger 16 from moving into the handle 15. When the lock-off button 43 is positioned at the extending position as shown in FIG. 6(B), the stopper plate 43c is faced to the recess 16a of the trigger 16 so as to permit the trigger 16 to move into the handle 15 for starting the motor 6.

The operation of the above embodiment will now be described. When the body 4 of the miter saw 1 is positioned at the uppermost position as shown in FIGS. 1 and 2, the lock pin 36 is in engagement with the lower end of the control slot 30 of the link member 26 as shown in FIG. 5(A). At this situation, the lock pin 36 cooperates with the guide pin 31 engaged with the upper portion 30a of the control slot 30 so as to fix the link member 26 in position and to maintain the body 4 at the uppermost position. Since the link member 26 is thus fixed in position, the safety cover 18 is prevented from rotation in a direction to uncover the exposed part of the saw blade 12. Additionally, at this situation, the stopper portion 41 of the lever member 34 is in opposed relationship with the end portion 18a of the safety cover 18 in the rotational direction of the safety cover 18 as shown in FIG. 6(A), and therefore, the safety cover 18 is further prevented from rotation to uncover the exposed part of the saw blade 12. Further, at this situation, the stopper plate 43b of the lock-off button 43 is faced to the end surface 16b of the trigger 16, and therefore, the trigger 16 is prevented from moving into the handle 15 for starting the motor 6.

As the lever member 34 is moved away from the blade case 13 against the force of the compression spring 45, the lock pin 36 is disengaged from the control slot 30 of the link member 26 as shown in FIG. 5(B), and simultaneously therewith, the stopper portion 41 of the lever member 34 is moved laterally away from the end portion 18a of the safety cover 18 as shown in FIG. 6(B). This may permit downward pivotal movement of the body 4 by moving the handle 15, and may permit the rotational movement of the safety cover 18 in a direction to uncover the exposed part of the saw blade 12 (a reverse direction to the direction shown by the arrow A in FIG. 2). Further, as the lever member 34 is thus moved laterally, the handle portion 47 pushes the lock-off button 43 into the handle 15 through abutment on the head 43b of the lock-off button 43. Thus, the trigger 16 is allowed to be pushed into the handle 15 for starting the motor 6 through entering of the part of the stopper plate 43c into the recess 16a.

At this stage, as the operator moves the body 4 downwardly by the handle 15, the link member 26 is pivoted in response to the movement of the engaging position of the roller pin 31 with the control slot 30 of the link member 26. As the link member 26 is thus pivoted, the safety cover 18 is rotated in the direction shown by the arrow A in FIG. 2 to uncover the exposed part of the saw blade 12.

Once the body 4 is moved downwardly from the uppermost position, the lock pin 36 may not enter the control slot 30 but abuts on the rear surface of the link member 26 by the biasing force of the compression spring 45 because of the pivotal movement of the link member 26 even if the operator releases the lever member 34. Thus, the position of the lever member 34 as well as that of the lock plate 35 is kept at the position as shown in FIGS. 5(B) and 6(B). Therefore, the pivotal movement of the body 4 as well as the rotational movement of the safety cover 18 to uncover the saw blade 12 can be performed without any trouble, and the trigger 16 can be pushed into the handle 15 to start the motor 6 for cutting the work by the saw blade 12.

After completion of cutting operation of the work, the handle 15 is released to permit upward movement of the body 4 toward the uppermost position by the spring interposed between the arm 3 and the connecting portion 14. When the body 4 reaches the uppermost position, the lock pin 36 automatically returns to engage the control slot 30 of the link member 26 by the force of the compression spring 45. Thus, the lever 32 returns to the position as shown in FIGS. 5(A) and 6(A).

Thus, with the above embodiment, the lever 32 serves to fix the body 4 at the uppermost position and to fix the safety cover 18 at the position to entirely cover the exposed part of the saw blade 12 so as to prevent accidental exposure of the saw blade 12. Therefore, the miter saw 1 has a simple construction since it is not necessary to provide a lock mechanism for each of the body 4 and the safety cover 18.

In addition, the position of the link member 26 is reliably fixed through engagement of the lock pin 36 with the control slot 30 of the link member 26. Further, since the lock pin 36 is automatically engaged with the control slot 30 when the body 4 reaches the uppermost position, the lever 32 can be easily operated.

While the invention has been described with reference to a preferred embodiment, it is to be understood that modifications or variation may be easily made without departing from the invention which is defined by the appended claims.

## Claims

1. A miter saw (1) comprising:
a base (2);
a body (4) vertically pivotally mounted on said base (2) and rotatably supporting a saw blade (12) driven by a motor (6);
said body (4) including a blade case (13) for partly covering said saw blade (12) and including a safety cover (18) movable between a covering position to substantially cover the exposed part of said saw blade (12) and an uncovering position to uncover the exposed part of the saw blade (12);
a link member (26) connected between said base (2) and said body (4) so as to be pivotally moved in a pivotal plane as said body (4) is vertically pivoted said link member (26) being operably connected to said safety cover (18) such that said safety cover (18) is moved from said covering position to said uncovering position as said body (4) is pivoted downwardly from its uppermost position;
said safety cover (18) being operably connected to said link member (26) through abutment thereof by means of an abutting plate (27);
characterised by
a lever (32) for operation by an operator mounted on said body and movable between a first position and a second position (4);
said lever comprising a rod (33) mounted in said body (4) such that said rod is pivotable about the rod axis when said lever is moved between said first and said second position and a first and a second lever member (34, 35) rigidly connected to said rod (33);
said first lever member (34) including a stopper portion (41) said stopper portion (41) in said first position of said lever (32) being opposed to a part of said safety cover (18) to prevent movement of said safety cover (18) in a direction to uncover said exposed part of said saw blade (12) and in said second position of said lever not being so opposed;
said second lever member (35) engaging a lock member (36) said lock member being movable by movement of said lever (32) said lock member (36) at said first position of said lever (32) engaging said link member (26) for fixing said link member (26) in position when said body (4) is positioned at said uppermost position thereby maintaining said body (4) at said uppermost position and said lock member (36) at said second position of said lever (32) being disengaged from said link member (26);
said body (4) including a trigger (16) and a trigger lock device (43,44) mounted on a part of said body (4); said trigger (16) being operable by an operator for starting and stopping said motor (6); said trigger lock device (43,44) being operable to selectively fix said trigger (16) at a position for stopping said motor (6); said first lever member (34) being interlocked with said trigger lock device (43,44) in such a manner that said trigger lock device (43,44) operates to fix said trigger (16) to said position for stopping said motor (6) when said lever (32) is positioned at said first position and that said trigger lock device (43,44) permits said trigger (16) to be operated for starting said motor (6) when said lever (32) is at said second position.

2. The miter saw as defined in claim 1 wherein said movement of said lever (32) from said first to said second position moves said lock member (36) in a direction substantially perpendicular to the pivotal plane of said link member (26).

3. The miter saw as defined in claim 1 or 2 wherein said body (4) includes a handle (15) for pivotal movement of said body (4) by the operator; said handle (15) has a first portion to be grasped by the operator; said lever (32) has a lever handle portion positioned adjacent said first portion of said handle (15), so that the operator can operate said lever (32) with the lever handle portion as well as said first portion of said handle (15) grasped by one hand of the operator.

4. The miter saw as defined in any one of claims 1 to 3 wherein said link member (26) includes a control slot (30) in engagement with a guide pin (31) fixed to said body (4); said lock member includes a lock pin (36) for engagement with said control slot (30) at a position different from the engaging position of said guide pin (31); and said lock pin (36) cooperates with said guide pin (31) for preventing movement of said link member (26).

5. The miter saw as defined in claim 4 wherein said lock pin (36) is slidably supported by said body (4).

6. The miter saw as defined in any one of claims 1 to 5 and further including biasing means (45) for normally maintaining said lever (32) at said first position and for keeping engaging position of said lock member (36) with said link member (26).

7. The miter saw as defined in any preceding claim wherein said trigger lock device (43, 44) includes a lock-off button (43) mounted on said part of said body (4) and movable between an extending position to extend from said part of said body (4) toward said first lever member (34) and a retracting position to retract into said part of said body (4); said lock-off button (43) is normally biased by a spring (44) in a direction toward said extending position; said lock-off button (43) at said extending position fixes said trigger (16) to said position for stopping said motor (6) when said lock-off button (43) is positioned at said extending position; said lock-off button (43) at said retracting position permits said trigger (16) to be moved for starting said motor (6); said lever member (34) at said first position of said lever (32) is spaced from said lock-off button (43); and said first lever member (34) moves said lock-off button (43) from said extending position to said retracting position when said first lever member (34) is moved by the operator by movement of said lever (32) from said first position to said second position.

8. The miter saw as defined in any preceding claim wherein said part of said body (4) having said trigger lock device (43, 44) is a handle (15) operable by the operator for vertically moving said body (4) relative to said base (2).

## Patentansprüche

1. Gehrungssäge (1) mit
einer Basis (2),
einem Körper (4), der an der Basis (2) vertikal verschwenkbar angebracht ist und ein Sägeblatt (12), das durch einen Motor (6) angetrieben wird, drehbar hält,
wobei der Körper (4) ein Blattgehäuse (3) zur teilweisen Abdeckung des Sägeblatts (12) und eine Sicherheitsabdeckung (18) enthält, die zwischen einer Abdeckposition, in der sie den freiliegenden Teil des Sägeblatts (12) im wesentlichen abdeckt, und einer Freigabeposition, bei der sie den freiliegenden Teil des Sägeblatts (12) nicht bedeckt, bewegbar ist,
einem Koppelelement (26), das zwischen die Basis (2) und den Körper (4) derart eingefügt ist, daß es in einer Schwenkebene schwenkbar bewegt wird, wenn der Körper (4) in Vertikalrichtung verschwenkt wird, wobei das Koppelglied (26) mit der Sicherheitsabdeckung (18) betrieblich derart verbunden ist, daß die Sicherheitsabdeckung (18) aus der Abdeckposition in die Freigabeposition bewegt wird, wenn der Körper (4) ausgehend von seiner obersten Position nach unten verschwenkt wird,
wobei die Sicherheitsabdeckung (18) mit dem Koppelelement (26) durch Anlage an diesem mittels einer Anschlagplatte (27) betrieblich verbunden ist,
dadurch **gekennzeichnet,**
daß ein Hebel (32) vorgesehen ist, der durch einen Benutzer betätigbar ist, an dem Körper angebracht ist und zwischen einer ersten Position und einer zweiten Position (4) bewegbar ist,
daß der Hebel eine Stange (33), die in dem Körper (4) derart angebracht ist, daß die Stange um die Stangenachse verschwenkbar ist, wenn der Hebel zwischen der ersten und der zweiten Position bewegt wird, und ein erstes und ein zweites Hebelelement (34, 35) aufweist, die starr mit der Stange (33) verbunden sind,
daß das erste Hebelelement (34) einen Anhalteabschnitt (41) aufweist, der in der ersten Position des Hebels (32) einem Teil der Sicherheitsabdeckung (18) gegenüberliegt, um hierdurch eine Bewegung der Sicherheitsabdeckung (18) in einer Richtung, bei der der freiliegende Teil des Sägeblatts (12) bloßgelegt wird, zu verhindern, während der Anhalteabschnitt in der zweiten Position des Hebels keine solche gegenüberliegende Haltung einnimmt,
daß das zweite Hebelelement (35) mit einem Verriegelungselement (36) in Eingriff steht, das aufgrund einer Bewegung des Hebels (32) bewegbar ist, wobei das Verriegelungselement (36) in der ersten Position des Hebels (32) mit dem Koppelelement (26) in Eingriff steht, um hierdurch das Koppelelement (26) in seiner Position festzuhalten, wenn der Körper (4) in seiner obersten Position angeordnet ist, wodurch der Körper (4) in der obersten Position gehalten bleibt, wohingegen sich das Verriegelungselement (36) in der zweiten Position des Hebels (32) außer Eingriff mit dem Koppelelement (26) befindet,
daß der Körper (4) ein Einschaltelement (16) und eine Einschaltelement-Verriegelungseinrichtung (43, 44) aufweist, die an einem Teil des Körpers (4) angebracht sind, daß das Einschaltelement (16) durch einen Benutzer zum Einschalten und Anhalten des Motors (6) betätigbar ist, daß die Einschallelement-Verriegelungseinrichtung (43, 44) derart betätigbar ist, daß das Einschaltelement (16) in einer Position zum Anhalten des Motors (6) selektiv festgelegt wird, daß das erste Hebelelement (34) mit der Einschaltelement-Verriegelungseinrichtung (43, 44) in einer solchen Weise gekoppelt ist, daß die Einschallelement-Verriegelungseinrichtung (43, 44) derart wirkt, daß das Einschaltelement (16) in der Position zum Anhalten des Motors (6) festgelegt ist, wenn sich der Hebel (32) in der ersten Position befindet, wohingegen die Einschaltelement-Verriegelungseinrichtung (43, 44) eine Betätigung des Einschaltelements (16) zum Starten des Motors (6) erlaubt, wenn sich der Hebel (32) in seiner zweiten Position befindet.

2. Gehrungssäge nach Anspruch 1, bei der das Verriegelungselement (36) bei einer Bewegung des Hebels (32) aus der ersten in die zweite Position in einer Richtung bewegt wird, die im wesentlichen rechtwinklig zu der Schwenkebene des Koppelelements (26) verläuft.

3. Gehrungssäge nach Anspruch 1 oder 2, bei der der Körper (4) einen Handgriff (15) für eine Verschwenkung des Körpers (4) durch den Benutzer aufweist, bei der der Handgriff (15) einen ersten Abschnitt enthält, der durch den Benutzer zu ergreifen ist, und bei der der Hebel (32) einen Hebelhandgriffabschnitt aufweist, der benachbart zu dem ersten Abschnitt des Handgriffs (15) angeordnet ist, so daß der Benutzer den Hebel (32) über den Hebelhandgriffabschnitt und auch den ersten Abschnitt des Handgriffs (15), der durch eine Hand des Benutzers ergriffen ist, betätigen kann.

4. Gehrungssäge nach einem der Ansprüche 1 bis 3, dadurch **gekennzeichnet,** daß das Koppelelement (26) einen Steuerschlitz (30) aufweist, der sich in Eingriff mit einem Führungsstift (31) befindet, der an dem Körper (4) befestigt ist, daß das Verriegelungselement einen Verriegelungsstift (36) enthält, der für einen Eingriff in den Steuerschlitz (30) an einer Position ausgelegt ist, die sich von der Position des Eingriffs des Führungsstifts (31) unterscheidet, und daß der Verriegelungsstift (36) mit dem Führungsstift (31) zur Verhinderung einer Bewegung des Koppelelements (26) zusammenwirkt.

5. Gehrungssäge nach Anspruch 4, dadurch **gekennzeichnet,** daß der Verriegelungsstift (36) an dem Körper (4) gleitverschieblich gehalten ist.

6. Gehrungssäge nach einem der Ansprüche 1 bis 5, **gekennzeichnet** durch eine Vorspanneinrichtung (45), die dazu ausgelegt ist, den Hebel (32) normalerweise in der ersten Position zu halten und die Eingriffsposition des Verriegelungselements (36) mit dem Koppelelement (26) beizubehalten.

7. Gehrungssäge nach einem der vorhergehenden Ansprüche, dadurch **gekennzeichnet,** daß die Einschaltelement-Verriegelungseinrichtung (43, 44) einen Entriegelungsknopf (43) aufweist, der an dem Teil des Körpers (4) angebracht ist und zwischen einer vorstehenden Position, in der er von dem Teil des Körpers (4) in Richtung zu dem ersten Hebelelement (34) vorsteht, und einer zurückgezogenen Position bewegbar ist, in der er in den Teil des Körpers (4) zurückgezogen ist, daß der Entriegelungsknopf (43) normalerweise durch eine Feder (44) in einer zu der vorstehenden Position gerichteten Richtung vorgespannt ist, daß der Entriegelungsknopf (43) das Einschaltelement (16) in seiner vorstehenden Position in der Position zum Anhalten des Motors (6) festlegt, wenn sich der Entriegelungsknopf (43) in der vorstehenden Position befindet, daß der Entriegelungsknopf (43) in seiner zurückgezogenen Position eine Bewegung des Einschaltelements (16) zum Starten des Motors (6) erlaubt, daß das Hebelelement (34) in der ersten Position des Hebels (32) von dem Entriegelungsknopf (43) beabstandet ist, und daß das erste Hebelelement (34) den Entriegelungsknopf (43) aus der vorstehenden Position in die zurückgezogene Position aufgrund einer Bewegung des Hebels (32) von der ersten Position in die zweite Position bewegt, wenn das erste Hebelelement (34) durch den Benutzer bewegt wird.

8. Gehrungssäge nach einem der vorhergehenden Ansprüche, dadurch **gekennzeichnet,** daß der Teil des Körpers (4), der die Einschalt-Verriegelungseinrichtung (43, 44) aufweist, ein Handgriff (15) ist, der durch den Benutzer zum Bewegen des Körpers (4) in vertikaler Richtung relativ zu der Basis (2) betätigbar ist.

## Revendications

1. Scie à onglets (1) comportant :
une base (2),
un corps (4) monté pivotant verticalement sur ladite base (2) et supportant de manière rotative une lame de scie (12) entraînée par un moteur (6),
ledit corps (4) comportant un carter de lame (13) pour recouvrir partiellement ladite lame de scie (12) et comportant un couvercle de sécurité (18) mobile entre une position de recouvrement pour pratiquement recouvrir la partie exposée de ladite lame de scie (12) et une position découvrante pour découvrir la partie exposée de la lame de scie (12),
un élément de liaison (26) relié entre ladite base (2) et ledit corps (4) de manière à être déplacé par pivotement dans un plan de pivotement lorsque ledit corps (4) pivote verticalement, ledit élément de liaison (26) étant connecté audit couvercle de sécurité (18) de manière à pouvoir être actionné de sorte que ledit couvercle de sécurité (18) est déplacé depuis la position de recouvrement vers ladite position découvrante lorsque ledit corps (4) est pivoté vers le bas à partir de sa position la plus haute,
ledit couvercle de sécurité (18) étant relié de manière active audit élément de liaison (26) par l'intermédiaire d'une mise en butée de celui-ci à l'aide d'une plaque de mise en butée (27),
caractérisée en ce qu'elle comporte :
un levier (32) destiné à être actionné par un opérateur, monté sur ledit corps (4) et mobile entre une première position et une seconde position,
ledit levier comportant une tige (33) montée dans ledit corps (4) de sorte que ladite tige peut pivoter autour de l'axe de la tige lorsque ledit levier est déplacé entre ladite première et ladite seconde position, et un premier et un second éléments de levier (34, 35) reliés de manière rigide à ladite tige (33),
ledit premier élément de levier (34) comportant une partie d'arrêt (41), ladite partie d'arrêt (41) dans ladite première position dudit levier (32) étant opposée à une partie dudit couvercle de sécurité (18) pour empêcher un déplacement dudit couvercle de sécurité (18) dans la direction découvrant ladite partie exposée de ladite lame de scie (12) et n'étant pas opposée dans ladite seconde position dudit levier,
ledit second élément de levier (35) venant en prise avec un élément de verrouillage (36), ledit élément de verrouillage étant mobile par déplacement dudit levier (32), ledit élément de verrouillage (36), au niveau de ladite première position dudit levier (32), venant en prise avec ledit élément de liaison (26) pour fixer ledit élément de liaison (26) en position lorsque ledit corps (4) est positionné au niveau de la position la plus haute en maintenant ainsi ledit corps (4) au niveau de ladite position la plus haute et ledit élément de verrouillage (36), au niveau de ladite seconde position dudit levier (36), étant libéré dudit élément de liaison (26),
ledit corps (4) comportant un déclencheur (16) et un dispositif de verrouillage du déclencheur (43, 44) montés sur une partie dudit corps, ledit déclencheur (16) pouvant être actionné par un opérateur pour démarrer et arrêter ledit moteur (6), ledit dispositif de verrouillage du déclencheur (43, 44) pouvant être actionné pour fixer sélectivement ledit déclencheur (16) au niveau d'une position destinée à arrêter ledit moteur (6), ledit premier élément de levier (34) étant mutuellement verrouillé avec ledit dispositif de verrouillage du déclencheur (43, 44) de manière telle que ledit dispositif de verrouillage du déclencheur (43, 44) agit pour fixer ledit déclencheur (16) dans ladite position destinée à arrêter ledit moteur (6) lorsque ledit levier (32) est positionné au niveau de ladite première position et que ledit dispositif de verrouillage du déclencheur (43, 44) permet audit déclencheur (16) d'être actionné pour faire démarrer ledit moteur (6) lorsque ledit levier (32) est au niveau de ladite seconde position.

2. Scie à onglets selon la revendication 1, dans laquelle ledit déplacement dudit levier (32) depuis ladite première vers ladite seconde position déplace ledit élément de verrouillage (36) dans une direction pratiquement perpendiculaire au plan de pivotement dudit élément de liaison (26).

3. Scie à onglets selon la revendication 1 ou 2, dans laquelle ledit corps (4) comporte une poignée (15) pour le déplacement pivotant dudit corps (4) par l'opérateur, ladite poignée (15) a une première partie destinée à être saisie par l'opérateur, ledit levier (32) a une partie de poignée de levier positionnée adjacente à ladite première partie de ladite poignée (15), de sorte que l'opérateur peut actionner ledit levier (32) à l'aide de la partie de poignée de levier ainsi que ladite première partie de ladite poignée (15) saisie par une main de l'opérateur.

4. Scie à onglets selon l'une quelconque des revendications 1 à 3, dans laquelle ledit élément de liaison (26) comporte une fente de commande (30) en prise avec un axe de guidage (31) fixé sur ledit corps (4), ledit élément de verrouillage comporte un axe de verrouillage (36) destiné à venir en prise avec ladite fente de commande (30) au niveau d'une position différente de la position de prise dudit axe de guidage (31), et ledit axe de verrouillage (36) coopère avec ledit axe de guidage (31) pour empêcher un déplacement dudit élément de liaison (26).

5. Scie à onglets selon la revendication 4, dans laquelle ledit axe de verrouillage (36) est supporté de manière coulissante par ledit corps (4).

6. Scie à onglets selon l'une quelconque des revendications 1 à 5, et comportant de plus des moyens de rappel (45) pour normalement maintenir ledit levier (32) au niveau de ladite première position et pour maintenir la position de prise dudit élément de verrouillage (36) avec ledit élément de liaison (26).

7. Scie à onglets selon l'une quelconque des revendications précédentes, dans laquelle ledit dispositif de verrouillage du déclencheur (43, 44) comporte un bouton de déverrouillage (43) monté sur ladite partie dudit corps (4) et mobile entre une position d'extension pour s'étendre depuis ladite partie dudit corps (4) en direction dudit premier élément de levier (34) et une position de retrait pour être rétracté dans ladite partie dudit corps (4), ledit bouton de déverrouillage (43) est normalement rappelé par un ressort (44) dans une direction dirigée vers ladite position d'extension, ledit bouton de déverrouillage (43) au niveau de ladite position d'extension fixe ledit déclencheur (16) dans ladite position destinée à arrêter ledit moteur (6) lorsque ledit bouton de déverrouillage (43) est positionné au niveau de ladite position d'extension ; ledit bouton de déverrouillage (43) au niveau de ladite position de retrait permet audit déclencheur (16) d'être déplacé pour démarrer ledit moteur (6) ; ledit élément de levier (34) au niveau de ladite première position dudit levier (32) est écarté dudit bouton de déverrouillage (43) ; et ledit premier élément de levier (34) déplace ledit bouton de déverrouillage (43) depuis ladite position d'extension vers ladite position de retrait lorsque ledit premier élément de levier (34) est déplacé par l'opérateur par déplacement dudit levier (32) depuis ladite première position vers ladite seconde position.

8. Scie à onglets selon l'une quelconque des revendications précédentes, dans laquelle ladite partie dudit corps (4) comportant ledit dispositif de verrouillage du déclencheur (43, 44) est une poignée (15) pouvant être actionnée par l'opérateur pour déplacer verticalement ledit corps (4) par rapport à ladite base (2).
